# EUROPEAN PATENT SPECIFICATION

(11) **EP 3 280 274 B1**
(45) Date of publication and mention of the grant of the patent: **16.12.2020**
(21) Application number: 16731360.0
(22) Date of filing: 08.04.2016
(51) Int. Cl.: A23L 33/00, A23L 33/115, A23L 33/12, A23L 33/19

(54) **NUTRITION WITH LARGE LIPID GLOBULES COMPRISING VEGETABLE FAT COATED WITH MILK PHOSPHOLIPIDS FOR IMPROVING GASTRIC EMPTYING**
ERNÄHRUNG MIT GROSSEN FETTKÜGELCHEN ENTHALTEND PFLANZLICHES FETT UND ÜBERZOGEN MIT MILCH-PHOSPHOLIPIDEN ZUR VERBESSERUNG DER MAGENENTLEERUNG
NUTRITION AVEC DE GROS GLOBULES DE LIPIDES COMPRENANT UNE GRAISSE VÉGÉTALE REVÊTUE DE PHOSPHOLIPIDES DE LAIT PERMETTANT D'AMÉLIORER LE VIDAGE GASTRIQUE

(30) Priority: 10.04.2015 EP 15163217
(43) Date of publication of application: 14.02.2018
(73) Proprietor: N.V. Nutricia, 2712 HM Zoetermeer (NL)
(72) Inventor: VAN DE HEIJNING, Hubertus Josephus Maria, 3584 CT Utrecht (NL); VAN DEN BRAAK, Claudia Catharina Maria, 3584 CT Utrecht (NL); THOMASSEN, Gabriël, 3584 CT Utrecht (NL); DENNIS STANLEY, Dennis Stanley, 3584 CT Utrecht (NL)
(74) Representative: Nederlandsch Octrooibureau
(86) International application number: PCT/NL2016/050243
(87) International publication number: WO 2016/163882

(56) References cited:
- WO-A1-2010/027258
- WO-A1-2011/108934
- WO-A1-2014/143470
- BOURLIEU CLAIRE ET AL: "The structure of infant formulas impacts their lipolysis, proteolysis and disintegration duringin vitrogastric digestion", FOOD CHEMISTRY, vol. 182, 6 March 2015 (2015-03-06), pages 224-235, XP029120584, ISSN: 0308-8146, DOI: 10.1016/J.FOODCHEM.2015.03.001
- GALLIER SOPHIE ET AL: "In vivodigestion of bovine milk fat globules: Effect of processing and interfacial structural changes. I. Gastric digestion", FOOD CHEMISTRY, vol. 141, no. 3, 14 June 2013 (2013-06-14) , pages 3273-3281, XP028679002, ISSN: 0308-8146, DOI: 10.1016/J.FOODCHEM.2013.06.020
- Martine Armand ET AL: "Digestion and absorption of 2 fat emulsions with different droplet sizes in the human digestive tract", , 1 December 1999 (1999-12-01), pages 1096-1106, XP055289318, Retrieved from the Internet: URL:http://ajcn.nutrition.org/content/70/6 /1096.full.pdf [retrieved on 2016-07-18]
- O O Santos J?nior ET AL: "Corresponding Author: Fatty Acid Content of Bovine Milkfat From Raw Milk to Yoghurt", American Journal of Applied Sciences, 1 January 2012 (2012-01-01), pages 1300-1306, XP55367034, Retrieved from the Internet: URL:http://thescipub.com/PDF/ajassp.2012.1 300.1306.pdf [retrieved on 2018-07-20]
- Emmanuel Hatzakis ET AL: "Determination of Phospholipids in Olive Oil by 31 P NMR Spectroscopy", Journal of Agricultural and Food Chemistry, vol. 56, no. 15, 1 August 2008 (2008-08-01), pages 6232-6240, XP55366829, US ISSN: 0021-8561, DOI: 10.1021/jf800690t
- Jakob Hovalt Mathiassen ET AL: "Emulsifying triglycerides with dairy phospholipids instead of soy lecithin modulates gut lipase activity : Emulsifying triglycerides with dairy phospholipids", EUROPEAN JOURNAL OF LIPID SCIENCE AND TECHNOLOGY., vol. 117, no. 10, 16 September 2015 (2015-09-16), pages 1522-1539, XP55494162, DE ISSN: 1438-7697, DOI: 10.1002/ejlt.201400505
- M.C. Michalski ET AL: "Size Distribution of Fat Globules in Human Colostrum, Breast Milk, and Infant Formula", JOURNAL OF DAIRY SCIENCE., vol. 88, no. 6, 1 June 2005 (2005-06-01), pages 1927-1940, XP055576005, US ISSN: 0022-0302, DOI: 10.3168/jds.S0022-0302(05)72868-X

## Description

### FIELD OF THE INVENTION

The present invention is in the field of nutritional compositions, in particular in the field of infant or follow on formula, which have a beneficial effect on gastric emptying.

### BACKGROUND OF THE INVENTION

Human milk is the major source of energy for many infants during the first part of their lives and is the preferred method of feeding. However, there are circumstances that make breast-feeding impossible or less desirable. In those cases infant formulae are a good alternative. The composition of modern infant formulae is adapted in such a way that it meets many of the special nutritional requirements of the fast growing and developing infant. Still it seems that improvements can be made towards the constitution of infant milk formulae.

Gastric emptying rate is increased in infants which are breast fed, compared to that of infants that are fed standard infant formula. A delayed gastric emptying time is disadvantageous for infants as it may increase the risk of gastro-oesophageal reflux. Also the kinetics of digestion and absorption of nutrients is altered, which may impact the kinetics of hormone release and the way the nutrients are handled by the body.

Nutritional factors ascribed to be involved in affecting gastric emptying rate are mainly caloric density, viscosity, osmolality, protein concentration and the presence and concentration of casein, but little attention has been paid to lipids.

Human milk is rich in lipids, which are a key source of energy and essential nutrients during infancy. The lipid globule size has an average mode diameter based on volume of about 4 µm. Milk fat globules in human milk or bovine milk are covered with a trilayer membrane, the milk fat globule membrane (MFGM) composed of phospholipids and other polar lipids and membrane proteins. A comparison between lipids in human milk and those in current infant milk formulas shows differences in physical structure. The lipid droplets produced during processing of IMF have a mode diameter based on volume about 0.3 to 0.5 µm, and are mainly coated with proteins such as casein.

Michalski et al. in Eur J Nutr (2005), 44:436-444 and Eur J Nutr (2006) 45:215-224 study direct influences of dispersion state and supramolecular structure of milk fat in various dairy preparations on triglyceride metabolism in the rat. In these studies a direct effect of different fat compositions was measured and the highest peak in plasma triglyceride (triacylglycerol) was observed for an un-emulsified fat preparation whereas a more gradual profile was found for a fat preparation with small casein covered droplets.

Bourlieu et al., Food Chemistry, 2015, 182: 224-235 compared, using a semi-dynamic gastric in vitro digestions, a minimally processed milk emulsion containing native (cow's milk) fat milk globules, and two processed model infant formulas (homogenized or homogenized/pasteurized) with neo-formed small lipid globules coated mainly with proteins. Processing infant formulas modified the mechanism of gastric aggregation of milk fat globules and kinetics of release of fatty acids and peptides when compared with minimally processed formula.

However, using enriched bovine milk fat fractions or processes to obtain large native milk fat globules as described above to apply in infant formula is commercially less relevant, as the cow's milk fat fatty acid composition comprises too low amount of essential fatty acids to meet the regulatory requirements for infant formula. Furthermore such processes may not be economically feasible on large scale. Additionally, for food safety reasons heat treatment during the production of infant formula is required, and for producing powdered formula, the preferred format for infant and follow on formula, additional heat is applied during the spray drying step.

Gallier et al, Food Chemistry, 2013, 182: 3273-3281 studied the in vivo gastric digestion of fat globules in bovine cream from raw, pasteurized or pasteurized and homogenized milk. Armand et al, Am. J. Clin. Nutr., 1999, 1096-1106 investigated the effect of the fat globule size of two enteral emulsions on fat digestion and assimilation in humans. WO 2011/108934 A1 observed an effect of lipid globules which are coated with a layer comprising polar lipids on attenuating the availability of fat in plasma for a prolonged period of time in response to an intake of standard fat (without coated droplets). WO 2010/027258 A1 concerns a composition with large lipid globules for preventing obesity and/or improve the body composition later in life. WO 2014/143470 A1 discloses a nutritional composition for promoting lipid digestion comprising an enriched lipid fraction derived from milk, the composition optionally comprises large lipid globules.

### SUMMARY OF THE INVENTION

There is a need to have infant formula, follow on formula or growing up formulae, that i) comprise lipid globules that comprise vegetable fat high in essential fatty acids, ii) have been newly formed during the homogenization steps during the production process and iii) preferably have been heat treated during the production process of such formulae, wherein the gastric emptying rate is increased and post prandial fat absorption and digestion kinetics are increased and more comparable to the emptying rate and kinetics of postprandial fat absorption and digestion kinetics of human milk.

In a clinical trial with a cross over design the postprandial fat absorption was tested comparing a nutritional composition with large lipid globules and coated with phospholipids, versus a standard nutritional composition with small lipid globules coated with casein and whey protein. The nutritional compositions were similar in composition, except for the lipid globule size and the presence of phospholipids. Both nutritional compositions comprised lipid globules that were newly formed in a mild homogenization step of an aqueous and fat phase during the production process and that had been heat treated during the production process. It was found that gastric emptying rate was increased, the occurrence and rate of postprandial lipid absorption was increased when consuming the nutritional composition with large lipid globules and coated with phospholipids compared to when consuming of the standard nutritional composition. Furthermore, in an in vitro model closely mimicking the digestive conditions of young infants, the inventors found that the nutritional compositions with large lipid globules coated with phospholipids showed a decreased rate and extent of protein aggregate formation under stomach conditions and a decreased rate of lipolysis, when compared to the control formula. The rate of lipolysis was most optimal when milk derived phospholipids were used, and when milk triglycerides were present next to vegetable lipids.

The present invention relates to nutritional compositions with increased rate of gastric emptying due to the presence of lipid globules that are larger than conventional, or with a lower specific surface area than conventional, and that comprise a coating comprising milk derived phospholipids, when compared to the rate of gastric emptying of standard infant formula, and which is considered to be more comparable to the rates of gastric emptying and postprandial lipid absorption observed when feeding human milk. The invention is as defined in the appended claims.

### DETAILED DESCRIPTION

The present invention concerns a nutritional composition for use in reducing the rate and extent of protein aggregate formation in the stomach and/or increasing the gastric emptying rate in an infant with an age below 36 months that suffers from delayed gastric emptying and/or gastric reflux, the composition comprising carbohydrates, protein, and lipid globules, wherein the protein comprises casein and the lipid globules comprise triglycerides derived from vegetable fat and phospholipids derived from non human mammalian milk and wherein the lipid comprises at least 10 wt.% linoleic acid based on total fatty acids and at least 1 wt.% alpha-linolenic acid based on total fatty acids and wherein the lipid globules have
- a mode diameter from 2 to 6 µm, wherein the mode diameter is the diameter which is the most present based on volume of total lipid, or
- a specific surface area from 2.0 to 7.0 m2/g lipid, wherein the specific surface area is the surface area per weight of lipid, or
- a mode diameter from 2 to 6 µm and a specific surface area from 2.0 to 7.0 m2/g lipid wherein the method to determine the volume of lipid globules and their size distribution is by using a Mastersizer particle size analyzer (Malvern Instruments, Malvern, UK) according to the method described in Michalski et al, 2001, Lait 81: 787-796 and wherein the lipid globules comprise a coating comprising the phospholipids and the composition comprises 30 to 99.5 wt.% vegetable lipids based on total lipids and at least 80 wt.% of the phospholipids is derived from cow's milk,
and wherein the nutritional composition is an infant formula and/or a follow on formula. Throughout this description the term 'fat' and 'lipid' or 'lipids' are used interchangeably.

### Lipid component

The composition that is to be administered according to the present invention comprises lipids. The composition comprises at least triglycerides derived from vegetable fat and phospholipids derived from non human mammalian milk. Preferably the composition comprises at least 70 wt.%, more preferably at least 80 wt.%, more preferably at least 85 wt.% triglycerides, even more preferably at least 90 wt.% triglycerides based on total lipids. The lipids may further comprise one or more of free fatty acids, monoglycerides and diglycerides.

The lipid provides preferably 30 to 60 % of the total calories of the composition. More preferably the present composition comprises lipid providing 35 to 55 % of the total calories, even more preferably the present composition comprises lipid providing 40 to 50 % of the total calories. When in liquid form, e.g. as a ready-to-feed liquid, the composition preferably comprises 2.1 to 6.5 g lipid per 100 ml, more preferably 3.0 to 4.0 g per 100 ml. In one embodiment, the composition that is to be administered according to the present use comprises at least 15 wt.% lipid based on dry weight of the composition. Based on dry weight the composition preferably comprises 10 to 50 wt.%, more preferably 12.5 to 40 wt.% lipid, even more preferably 15 to 35 wt.% lipid, even more preferably 19 to 30 wt.% lipid.

The composition that is to be administered according to the present invention comprises triglycerides derived from vegetable fat. In one embodiment derived from vegetable fat means originates from vegetable fat. Preferably the composition comprises vegetable lipids. The presence of vegetable lipids advantageously enables an optimal fatty acid profile, high in polyunsaturated fatty acids and more reminiscent to human milk fat. Using lipids from ruminant milk in particular cow's milk alone, or other domestic ruminant mammals, does not provide an optimal fatty acid profile. This less optimal fatty acid profile, such as a large amount of saturated fatty acids, is known to be not beneficial. Preferably the present composition comprises at least one, preferably at least two lipid sources selected from the group consisting of linseed oil (flaxseed oil), rape seed oil (such as colza oil, low erucic acid rape seed oil and canola oil), salvia oil, perilla oil, purslane oil, lingonberry oil, sea buckthorn oil, hemp oil, sunflower oil, high oleic sunflower oil, safflower oil, high oleic safflower oil, olive oil, black currant seed oil, echium oil, coconut oil, palm oil and palm kernel oil. Preferably the present composition comprises at least one, preferably at least two lipid sources selected from the group consisting of linseed oil, canola oil, coconut oil, sunflower oil and high oleic sunflower oil. The composition comprises 30 to 99.5 wt.% vegetable lipids based on total lipids, more preferably 35 to 99 wt.%, even more preferably of 40 to 95 wt.%, based on total lipids.

### Phospholipids

The composition that is to be administered according to the present invention comprises phospholipids derived from non human mammalian milk. In one embodiment derived from non human mammalian milk means originates from non human mammalian milk. Phospholipids derived from non human mammalian milk comprises glycerophospho lipids and sphingomyelin. Phospholipids derived from non human mammalian milk are preferably comprised in a coating on the surface of the lipid globule. By 'coating' is meant that the outer surface layer of the lipid globule comprises phospholipids, whereas these phospholipids are virtually absent in the core of the lipid globule.

Not all phospholipids that are present in the composition need necessarily be comprised in the coating, but preferably a major part is. Preferably more than 30 wt.%, preferably more than 50 wt.%, more preferably more than 70 wt,%, even more preferably more than 85 wt.%, most preferably more than 95 wt.% of the phospholipids that are present in the composition are comprised in the coating of lipid globules.

In one embodiment, the composition that is to be administered according to the present invention comprises at least 0.5 wt.% phospholipids based on total lipid. Preferably the composition that is to be administered according to the present use comprises 0.5 to 20 wt.% phospholipids based on total lipid, more preferably 0.5 to 10 wt.%, more preferably 1 to 10 wt.%, even more preferably 1.0 to 5 wt.% even more preferably 1.0 to 2.0 wt.% phospholipids based on total lipid. At least 80 wt.% of the phospholipids is derived from non human mammalian milk, more preferably at least 90 wt.%, even more preferably at least 95 wt.% or 99% wt. or preferably all of the phospholipids is derived from non human mammalian milk.

Preferably the composition that is to be administered according to the present invention comprises sphingomyelin. Sphingomyelins have a phosphorylcholine or phosphorylethanolamine molecule esterifiedto the 1-hydroxy group of a ceramide. Preferably the composition that is to be administered according to the present use comprises 0.05 to 10 wt.% sphingomyelin based on total lipid, more preferably 0.1 to 5 wt.%, even more preferably 0.2 to 2 wt.%. Preferably the nutritional composition comprises at least 15 wt.%, more preferably at least 20 wt.% sphingomyelin based on total phospholipids. Preferably the amount of sphingomyelin is below 50 wt.% based on total phospholipids.

Preferably the composition that is to be administered according to the present invention comprises glycerophospholipids. Glycerophospholipids are a class of lipids formed from fatty acids esterified at the hydroxyl groups on carbon-1 and carbon-2 of the backbone glycerol moiety and a negatively-charged phosphate group attached to carbon-3 of the glycerol via an ester bond, and optionally a choline group (in case of phosphatidylcholine, PC), a serine group (in case of phosphatidylserine, PS), an ethanolamine group (in case of phosphatidylethanolamine, PE), an inositol group (in case of phosphatidylinositol, PI) or a glycerol group (in case of phosphatidylglycerol, PG) attached to the phosphate group. Preferably the composition contains PC, PS, PI and/or PE, more preferably at least PS. Preferably the composition that is to be administered according to the present use comprises at least 1 wt.%, preferably at least 2 wt.% phosphatidylserine based on total phospholipids. Preferably the amount of phosphatidylserine is below 10 wt.% based on total phospholipids.

Phospholipids derived from non human mammalian milk include phospholipids isolated from milk lipid, cream lipid, cream serum lipid, butter serum lipid beta serum lipid, whey lipid, cheese lipid and/or buttermilk lipid. The buttermilk lipid is typically obtained during the manufacture of buttermilk. The butter serum lipid or beta serum lipid is typically obtained during the manufacture of anhydrous milk fat from cream or butter. Preferably the phospholipids are obtained from milk cream. The phospholipids are preferably derived from milk of cows, mares, sheep, goats, buffalos, horses and camels, most preferably from cow's milk. It is most preferred to use a lipid extract isolated from cow's milk. A suitable source of phospholipids derived from non human mammalian milk is the fraction that can be isolated from milk called milk fat globule membrane (MFGM). Hence in one embodiment, the phospholipids to be used in the method according to the present invention are provided as MFGM.

Phospholipids derived from milk fat are located on the surface of the lipid globule, i.e. comprised in a coating or outer layer. In one embodiment, the lipid globules comprise a monolayer comprising phospholipids derived from milk fat. A suitable way to determine whether the polar lipids are located on the surface of the lipid globules is laser scanning microscopy or trans-electron microscopy. The concomitant use of polar lipids in particular phospholipids, derived from domestic animals milk and trigycerides derived from vegetable lipids therefore enables to manufacture coated lipid globules with a coating more similar to human milk, while at the same time providing an optimal fatty acid profile.

### Milk fat

Preferably the composition that is to be administered according to the present invention comprises fat or lipids from mammalian milk. Preferably the composition comprises lipids from ruminants milk, preferably cow's milk, goat milk, sheep milk, buffalo milk, yak milk, reindeer milk, and camel milk, most preferably cow's milk. Preferably the mammalian milk is not human milk. Hence in one embodiment, the composition that is to be administered according to the present use comprises non-human mammalian milk fat. Preferably the mammalian milk component comprises at least 70 wt.% triglycerides, more preferably at least 90 wt.%, more preferably at least 97 wt.%.

Preferably the mammalian milk lipid is derived from the group consisting of butter, butter fat, butter oil, and anhydrous milk fat, more preferably anhydrous milk fat and butter oil. Such milk fat lipid sources are high in triglyceride levels. Furthermore these lipid sources are in the form of a continuous fat phase or in a water-in-oil emulsion form. Using these sources of milk fat during the manufacture of the nutritional composition of the present invention enable the formation of lipid globules, wherein each globule comprises a mixture of vegetable fat and milk fat.

Milk fat in the present invention refers to all lipid components of milk, as produced by mammals, such as the cow, and is found in commercial milk and milk-derived products. Butter as defined herein is a water-in-oil emulsion comprising over 80 wt.% milk fat.

Butter fat as defined herein relates to all of the fat components in milk that are separable by churning, in other words, present in butter.

Anhydrous milk fat (AMF) is a term known in the art and relates to extracted milk fat. Typically AMF comprises more than 99 wt.% lipid based on total weight. It can be prepared from extracting milk fat from cream or butter. Anhydrous butter oil as defined herein is synonymous with AMF.

Butter oil also is a term known in the art. It typically relates to a milk lipid extract with more than 98 wt.% lipid and typically is a precursor in the process of preparing anhydrous milk fat or anhydrous butter oil.

Preferably the composition comprises 5 to 70 wt.% non-human mammalian milk lipids based on total lipids. In one embodiment the composition comprises 10 to 65 wt.%, even more preferably 15 to 60 wt.%, even more preferably 25 to 55 wt.% non-human mammalian milk lipids based on total lipids. Preferably these milk lipids are selected from the group consisting of butter, butter fat, butter oil, and anhydrous milk fat.

Preferably the ratio of vegetable fat to milk fat ranges from 3/7 to 20/1.

The composition also may comprise non-vegetable lipids and non-milk fat, such as animal fat other than milk fat, such as fish oil, and egg lipid, and microbial, algal, fungal or single cell oils. Preferably the non vegetable, non-milk fat is present in an amount of at most 10 wt.% based on total lipid, more preferably at most 5 wt.%. Preferably the lipid in the nutritional composition according to the invention comprises a fat source comprising long chain polyunsaturated fatty acids (LC-PUFA), selected from the group consisting of fish oil, marine oil, algal oil, microbial oil, single cell oil and egg lipid in an amount of 0.25 to 10 wt.% based on total lipid, preferably in an amount of 0.5 to 10 wt.%.

### Lipid globule size

According to the present invention, lipid is present in the composition in the form of lipid globules. When in liquid form these lipid globules are emulsified in the aqueous phase. Alternatively the lipid globules are present in a powder and the powder is suitable for reconstitution with water or another food grade aqueous phase. Typically and preferably, the lipid globules comprise a core and a surface. The core preferably comprises vegetable fat and milk fat and preferably comprises at least 80 wt.%, more preferably at least 90 wt.% triglycerides and more preferably essentially consists of triglycerides. Not all triglyceride lipids that are present in the composition need necessarily be comprised in the core of lipid globules, but preferably a major part is, preferably more than 50% wt.%, more preferably more than 70 wt.%, even more preferably more than 85 wt.%, even more preferably more than 95 wt.%, most preferably more than 98 wt.% of the triglyceride lipids that are present in the composition are comprised in the core of lipid globules.

The lipid globules to be administered according to the present invention have a mode diameter based on volume preferably above 2.5 µm, more preferably above 3.0 µm. The lipid globules to be administered according to the present invention have a mode diameter based on volume preferably below 5.5 µm, more preferably of below 5.0 µm. Preferably the lipid globules have a mode diameter based on volume from 2 to 6 µm, preferably form 2.0 to 6.0 µm, more preferably from 2.5 to 6.0 µm, more preferably from 3.0 to 6.0 µm, even more preferably from 3.0 to 5.5 µm, even more preferably from 3.0 to 5.0 µm.

Standard infant formulae or growing up milks have lipid globules with mode diameter well below 1.0 µm, typically about 0.5 µm. It was found that large lipid globules have an improved effect on the rate of gastric emptying.

The percentage of lipid globules is based on volume of total lipid. The mode diameter relates to the diameter which is the most present based on volume of total lipid, or the peak value in a graphic representation, having on the X-as the diameter and on the Y-as the volume (%). The method to determine the volume of lipid globules and their size distribution is by using a Mastersizer particle size analyzer (Malvern Instruments, Malvern, UK), according to the method described in Michalski et al, 2001, Lait 81: 787-796. The specific surface area of lipid globules is the surface area per weight of lipid and decreases as the size of globules increases. The specific surface area of the lipid globules is thus calculated from the particle size distribution of the lipid globules and the concentration and density of the lipid. The lipid globules to be administered according to the present invention preferably have a specific surface area of 2.0 to 7.0 m²/g lipid. D[3,2] is the surface area moment mean or Sauter Mean diameter and can be determined with the Mastersizer's particle analyser software. D[4,3] is the volume moment mean diameter or the De Brouckere mean diameter.

Methods for obtaining lipid globules with an increased size and/or coating with phospholipids are disclosed in WO 2010/ 0027258 and WO 2010/0027259.

### Fatty acid composition

Herein LA refers to linoleic acid and/or acyl chain (18:2 n6); ALA refers to α-linolenic acid and/or acyl chain (18:3 n3); LC-PUFA refers to long chain polyunsaturated fatty acids and/or acyl chains comprising at least 20 carbon atoms in the fatty acyl chain and with 2 or more unsaturated bonds; DHA refers to docosahexaenoic acid and/or acyl chain (22:6, n3); EPA refers to eicosapentaenoic acid and/or acyl chain (20:5 n3); ARA refers to arachidonic acid and/or acyl chain (20:4 n6); DPA refers to docosapentaenoic acid and/or acyl chain (22:5 n3). PUFA refers to polyunsaturated fatty acids and/or acyl chains comprising 2 or more unsaturated bonds; MUFA refers to fatty acids and/or acyl chains comprising one unsaturated bond; SFA refers to saturated fatty acids and/or acyl chains. Medium chain fatty acids (MCFA) refer to fatty acids and/or acyl chains with a chain length of 8 to 12 carbon atoms. Butyric acid (BA) refer to fatty acids and/or acyl chains comprising 4 carbon atoms.

Preferably the composition that is to be administered according to the present invention comprises 10 to 25 wt.% PUFA based on total fatty acids. Amounts above 25 wt.% will be much higher than present in human milk, and will encompass technological problems such as stability in the nutritional composition.

LA preferably is present in a sufficient amount in order to promote a healthy growth and development. The composition therefore preferably comprises less than 20 wt.% LA based on total fatty acids. The composition comprises at least 10 wt.% based on total fatty acids. Preferably ALA is present in a sufficient amount to promote a healthy growth and development of the infant. The present composition therefore comprises at least 1.0 wt.% ALA based on total fatty acids. Preferably the composition comprises at least 1.4 wt.% ALA based on total fatty acids, more preferably at least 1.5 wt.%. Preferably the composition comprises less than 10 wt.% ALA, more preferably less than 5.0 wt.% based on total fatty acids. The composition that is to be administered according to the present invention comprises at least 10 wt.% LA and at least 1 wt.% ALA, preferably from 10 to 20 wt.% LA and from 1 to 5 wt.% ALA.

In one embodiment, the composition that is to be administered according to the present invention comprises at least 0.3 wt.% BA based on weight of total fatty acids. In one embodiment the nutritional composition comprises from 0.3 to 4.0 wt.% BA based on weight of total fatty acids. The presence of relatively high amounts of BA is characteristic for triglycerides derived from ruminant milk, such as cow's milk. It is not present in vegetable fat or MCT rich fat such as coconut oil and it is also not found in polar lipids derived from milk fat. So one alternative way of describing the presence of milk fat triglycerides in a composition is to define the fatty acid profile in having a BA content from 0.3 to 4.0 wt.% based total fatty acids. Based on total weight of fatty acids, the composition preferably comprises at least 0.3 wt.% BA, preferably at least 0.5 wt.%, more preferably at least 0.6 wt.%, more preferably at least 0.8 wt.%. Preferably the composition has a wt.% of BA below 4 wt.% based on weight of total fatty acids more preferable below 3 wt.%, more preferable below 2.5 wt.%. Without wishing to be bound by theory, the presence of BA may provide the advantageous effects.

In one embodiment, the composition that is to be administered according to the invention comprises at least 10 wt.% LA, at least 1 wt.% ALA and at least 0.3 wt.% BA, based on total weight of fatty acids, preferably from 10 to 20 wt.% LA, from 1 to 5 wt.% ALA and from 0.3 to 3 wt.% BA, based on total weight of fatty acids.

Preferably the composition that is to be administered according to the present invention comprises at least 5 wt.% MCFA based on total fatty acids, more preferably at least 7 wt.%. The composition advantageously comprises less than 15 wt.% MCFA based on total fatty acids, more preferably less than 10 wt.%.

Preferably the composition that is to be administered according to the present invention comprises LC-PUFA, more preferably n-3 LC-PUFA. More preferably, the present composition comprises EPA, DPA and/or DHA, even more preferably DHA. Since a low concentration of DHA, DPA and/or EPA is already effective and normal growth and development are important, the content of n-3 LC-PUFA in the present composition, more preferably DHA, preferably does not exceed 5 wt.% of the total fatty acid content. Preferably the composition comprises at least 0.15 wt.%, preferably at least 0.35 wt.%, more preferably at least 0.75 wt.%, n-3 LC-PUFA, more preferably DHA, of the total fatty acid content. The composition preferably comprises at least 0.25 wt% LC-PUFA based on total fatty acids. Preferably the lipid in the composition comprises a fat source comprising 0.25 wt. % to 5 wt.% LC-PUFA based on total fatty acids of which at least 0.15 wt% n-3 LC-PUFA based on total fatty acids selected from the group consisting of DHA, EPA, and DPA, more preferably DHA. As the group of n-6 fatty acids, especially arachidonic acid (ARA) and LA as its precursor, counteracts the group of n-3 fatty acids, especially DHA and EPA and ALA as their precursor, the composition preferably comprises relatively low amounts of ARA. The n-6 LC-PUFA, more preferably ARA, content preferably does not exceed 5 wt.%, more preferably does not exceed 2.0 wt.%, more preferably does not exceed 0.75 wt.%, even more preferably does not exceed 0.5 wt.%, based on total fatty acids. Since ARA is important in infants for optimal functional membranes, especially membranes of neurological tissues, the amount of n-6 LC-PUFA, preferably of ARA, is preferably at least 0.02 wt.% more preferably at least 0.05 wt.%, more preferably at least 0.1 wt.% based on total fatty acids, more preferably at least 0.2 wt.%. The presence of preferably low amounts of ARA is beneficial in nutrition to be administered to infants below the age of 6 months, since for these infants the infant formulae is generally the only source of nutrition. Preferably the n-6 LC-PUFA/n-3 LC-PUFA weight ratio, more preferably ARA/DHA weigh ratio is below 3, more preferably 2 or below, even more preferably 1 or below.

### Protein

The composition that is to be administered according to the present invention comprises protein and the protein comprises casein. The protein preferably provides 5 to 15% of the total calories. Preferably the composition comprises protein that provides 6 to 12% of the total calories. More preferably protein is present in the composition below 9% based on calories. Human milk comprises a lower amount of protein based on total calories than cow's milk. The protein concentration in a nutritional composition is determined by the sum of protein, peptides and free amino acids. Based on dry weight the composition preferably comprises less than 12 wt.% protein, more preferably from 9.6 to 12 wt.%, even more preferably from 10 to 11 wt.%. Based on a ready-to-drink liquid product the composition preferably comprises less than 1.5 g protein per 100 ml, more preferably from 1.2 to 1.5 g, even more preferably from 1.25 to 1.35 g.

The source of the protein should be selected in such a way that the minimum requirements for essential amino acid content are met and satisfactory growth is ensured. Hence, in addition to casein, protein sources based on cows' milk proteins such as whey and proteins based on soy, potato or pea are preferred. Preferably the composition that is to be administered according to the present use comprises casein and whey protein. In case whey proteins are included, the protein preferably comprises acid whey or sweet whey, whey protein isolate or mixtures thereof and may include α-lactalbumin and β-lactoglobulin. More preferably, the protein comprises acid whey or sweet whey from which caseino-glyco-macropeptide (CGMP) has been removed. Preferably the composition comprises at least 3 wt.% casein based on dry weight. Preferably the casein is intact and/or non-hydrolyzed. For the present invention protein includes peptides and free amino acids.

### Digestible carbohydrates

The composition that is to be administered according to the present invention comprises digestible carbohydrate. The digestible carbohydrate preferably provides 30 to 80% of the total calories of the composition. Preferably the digestible carbohydrate provides 40 to 60% of the total calories. When in liquid form, e.g. as a ready-to-feed liquid, the composition preferably comprises 3.0 to 30 g digestible carbohydrate per 100 ml, more preferably 6.0 to 20, even more preferably 7.0 to 10.0 g per 100 ml. Based on dry weight the present composition preferably comprises 20 to 80 wt.%, more preferably 40 to 65 wt.% digestible carbohydrates.

Preferred digestible carbohydrate sources are lactose, glucose, sucrose, fructose, galactose, maltose, starch and maltodextrin. Lactose is the main digestible carbohydrate present in human milk. Lactose advantageously has a low glycemic index. The present composition preferably comprises lactose. The present composition preferably comprises digestible carbohydrate, wherein at least 35 wt.%, more preferably at least 50 wt.%, more preferably at least 75 wt.%, even more preferably at least 90 wt.%, most preferably at least 95 wt.% of the digestible carbohydrate is lactose. Based on dry weight the present composition preferably comprises at least 25 wt.% lactose, preferably at least 40 wt.%.

### Non digestible carbohydrates

In one embodiment preferably the composition that is to be administered according to the present invention comprises non-digestible oligosaccharides. Preferably the present composition comprises non-digestible oligosaccharides with a degree of polymerization (DP) from 2 to 250, more preferably from3 to 60.

Preferably the present composition comprises fructo-oligosaccharides, galacto-oligosaccharides and/or galacturonic acid oligosaccharides, more preferably galacto-oligosaccharides, most preferably transgalacto-oligosaccharides. In a preferred embodiment the composition comprises a mixture of transgalacto-oligosaccharides and fructo-oligosaccharides. Suitable non-digestible oligosaccharides are for example Vivinal GOS (Frieslandcampina DOMO), Raftilin HP or Raftilose (Orafti).

Preferably, the composition comprises of 80 mg to 2 g non-digestible oligosaccharides per 100 ml, more preferably 150 mg to 1.50 g, even more preferably 300 mg to 1 g per 100 ml. Based on dry weight, the composition preferably comprises 0.25 wt.% to 20 wt.%, more preferably 0.5 wt.% to 10 wt.%, even more preferably 1.5 wt.% to 7.5 wt.%.

### Other

The composition that is to be administered according to the present invention is suitable for providing the daily nutritional requirements to a human with an age below 36 months of age, particularly below 24 months of age, even more preferably below 18 months of age, most preferably an infant with an age of below 12 months or below, most preferably from 0 to 6 months of age. Hence, the nutritional composition is for feeding or is used for feeding a human subject, preferably an infant of below 36 months of age, preferably below 24 months of age, even more preferably below 18 months of age. Most preferably the composition in the present use is for administration to an infant with an age of below 12 months or below is used for feeding.

Preferably the composition that is to be administered according to the present invention comprises lipid and protein and digestible carbohydrate wherein the lipid preferably provides 30 to 60 % of total calories, the protein preferably provides 5 to 20 %, more preferably 5 to 15 wt.%, of the total calories and the digestible carbohydrate preferably provides 25 to 75% of the total calories. Preferably the composition comprises lipid providing 35 to 50% of the total calories, protein providing 6 to 12 % of the total calories and digestible carbohydrate providing 40 to 60 % of the total calories. In one embodiment, the protein provides 5 to 9 % of the total calories. The amount of total calories is determined by the sum of calories derived from protein, lipids and carbohydrates.

The composition preferably comprises other ingredients, such as vitamins, minerals according to international directives for infant formulae.

In one embodiment, the composition that is to be administered according to the present invention is an infant formula, a follow on formula or a growing up milk. In order to meet the caloric requirements of the infant, the composition preferably comprises 45 to 200 kcal/100 ml liquid, more preferably 60 to 90 kcal/100 ml liquid, even more preferably 60 to 75 kcal/100 ml liquid. This caloric density ensures an optimal ratio between water and calorie consumption. The osmolarity of the present composition is preferably between 150 and 420 mOsmol/l, more preferably 260 to 320 mOsmol/l. The low osmolarity aims to reduce the gastrointestinal stress.

Preferably the composition is in a liquid form, with a viscosity below 35 mPa.s, more preferably below 6 mPa.s as measured in a Brookfield viscometer at 20°C at a shear rate of 100 s⁻¹. In one embodiment, he composition that is to be administered according to the present use. Suitably, the composition is in a powdered form, which can be reconstituted with water or other food grade aqueous liquid, to form a liquid, or in a liquid concentrate form that should be diluted with water. It was found that lipid globules maintained their size and coating when reconstituted. In one embodiment, the composition that is to be administered according to the present use is in the form of a powder. In one embodiment the powder is obtained after the composition wherein the lipid globules were formed has been subjected to a heat treatment. When the composition is in a liquid form, the preferred volume administered on a daily basis is in the range of about 80 to 2500 ml, more preferably about 450 to 1000 ml per day.

### Application

Human milk lipids contribute about 45-55% of the milk energy content, amounting to a total fat intake of about 5.5 kg in a fully breastfed baby during the first six months of life. Lipids are mainly in the form of triglycerides, which are digested in the gastrointestinal tract by lipases. In adults the acid lipases (lingual and gastric lipase) make up 30% of lipid hydrolysis during digestion, with gastric lipase contributing the most. These acid lipases do not require bile acid or colipase for optimal enzymatic activity. In infants, acidic lipases are much more important, providing up to 50% of total lipolytic activity. Pancreatic lipase is secreted from the pancreas. Bile salts secreted from the liver and stored in gallbladder are released into the duodenum, where they coat and emulsify large fat droplets into smaller droplets, thus increasing the overall surface area of the fat, which allows the lipase to break apart the fat more effectively. The resulting monomers (two free fatty acids and one 2-monoacylglycerol) are then moved by way of peristalsis along the small intestine to be absorbed into the lymphatic system. In infants, the pancreatic lipase and bile salt levels are low, so the products from gastric lipolysis play an important role in the digestion of milk lipids by compensating for low levels of pancreatic lipase and emulsification.

It has been found that nutritional compositions with larger than conventional lipid globules that comprise vegetable fat with a mode diameter based on volume of 2 to 6 µm, and/or a specific surface area of 2.0 to 7.0 m²/g lipid, and coated with phospholipids derived from non human mammalian milk had an increased rate of gastric emptying when compared to standard infant milk formula and more comparable to human milk. Furthermore, it has been found that the nutritional compositions with the larger than conventional lipid globules and coated with phospholipids derived from non human mammalian milk showed a decreased rate and extent of protein aggregate formation under stomach conditions, when compared to standard infant milk formula.

With regular IMF, a gastric lipolysis will overload the small intestine with free fatty acid and induces feedback mechanisms to a higher extent. The overall amount of fat taken up by the body is the same, so there is no influence on energy uptake. The increased rate of gastric emptying modulates the fat release in the body and may have an impact on hormone signaling and is believed to have an overall beneficial health effect on infants.

Preferably the composition to be administered according to the present invention is administered orally to the subject, preferably the human infant. The subject is a human infant with an age below 36 months. The composition to be administered according to the present invention is for use in an infant with an age below 36 months, preferably below 18 months, more preferably below 12 months that suffers from delayed gastric emptying and/or gastric reflux.

### EXAMPLES

### Test compositions

Three infant formulas were prepared. Infant formula 1 is an infant formula of the present invention and comprised 3.4 g lipid per 100 ml (24.7 wt% based on dry weight), of which 3.2 g vegetable lipid, with 0.1 wt% butyric acid, 18.4 wt.% palmitic acid, 13.5 wt.% linoleic acid, 2.5 wt.% alpha linolenic acid, 0.36 wt.% arachidonic acid and 0.2 wt.% docosahexaenoic acid based on total fatty acids. The amount of phospholipid was 54.4 mg per 100 ml, 1.6 wt.% based on total lipid, of which 1.5 wt.% is derived from cow's milk fat globule membrane. The mode based on volume was about 4.4 µm and about 60 volume % of the lipid globules had a size from 2 to 12 µm as determined with Malvern Mastersizer method. The method to determine the volume of lipid globules and their size distribution is by using a Mastersizer particle size analyzer (Malvern Instruments, Malvern, UK), according to the method described in Michalski et al, 2001, Lait 81: 787-796. The specific surface area in m²/g lipid was 7.

Infant formula 2 is also an infant formula of the present invention and is similar to infant formula 1, but it comprised about 48 wt.% of cow's milk lipid and at least 45 wt.% vegetable lipid. The amount of butyric acid was 1.39 wt.%, the amount of palmitic acid was 17.7 wt.% (of which at least 20 % of residues in the sn2 position) 14.0 wt.% linolenic acid, 2.6 wt.% alpha-linolenic acid, 0.31 wt.% arachidonic acid and 0.2 wt.% docosahexaenoic acid.

Infant formula 3 was a control formula with a similar composition as infant formula number 1, but without the milk derived phospholipids. The mode based on volume was about 0.4 µm and less than 15 volume % of the lipid globules had a size from 2 to 12 µm as determined with Malvern Mastersizer method. The specific surface area in m²/g lipid was about 20.

### Example 1: Particle size properties of IMF with different lipid globules during in vitro gastric digestion

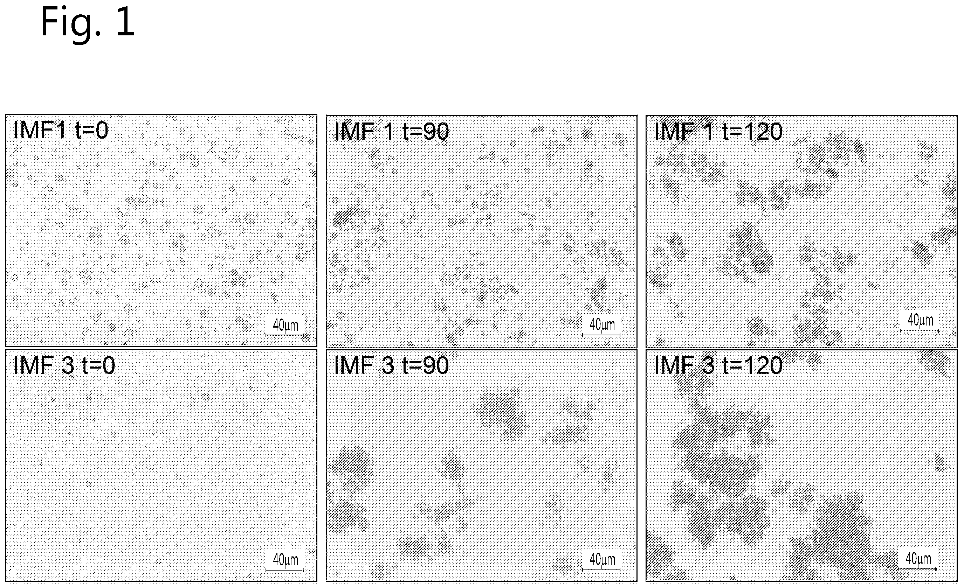

10 ml Samples of IMF 1, 2 and IMF 3 were described under Test compositions were collected during gastric digestion condition as described in example 3 in 15 ml tubes on ice for structural analysis on the same day. One drop of sample was put on a microscope glass slide and examined using light microscopy. Particle size distribution measurements were performed using Malvern Mastersizer. The results are shown in Table 1 and Figure 1.

Figure 1 shows microscopic (20x) images of IMF with different lipid globules during in vitro gastric digestion.

**Table 1: Particle size properties of IMF with different lipid globules during in vitro gastric digestion (n=3).**

| | | Mean Specific surface area (SSA) m²/g (s.e.) | | |
|---|---|---|---|---|
| | Time (min) | IMF 1 | IMF 2 | IMF 3 |
| Gastric phase | 0 | 6.88 (0.93) | 7.26 (1.15) | 19.67 (1,76) |
| | 10 | 6.63 (0.83) | 7.06 (0.96) | 20.30 (1.70) |
| | 60 | 7.00 (1.10) | 6.48 (1.19) | 18.73 (2.66) |
| | 90 | 1.68 (0.95) | 0.94 (0.12) | 0.51 (0.03) |
| | 120 | 0.77 (0.16) | 0.67 (0.03) | 0.45 (0.01) |

| | | Mean Volume weighted mean D[4,3] µg (s.e.) | | |
|---|---|---|---|---|
| | Time (min) | IMF 1 | IMF 2 | IMF 3 |
| Gastric phase | 0 | 3.96 (0.15) | 4.56 (0,67) | 1.52 (0.10) |
| | 10 | 4.45 (0.36) | 5.14 (0,51) | 0.84 (0.09) |
| | 60 | 7.63 (2.02) | 6.25 (0,79) | 3.98 (2.42) |
| | 90 | 9.57 (1.50) | 9.15 (0,99) | 15.15 (0.74) |
| | 120 | 12.26 (1.18) | 12.32 (0,42) | 17.35 (0.36) |

| | | Mean Surface weighted mean D[3,2] µg (s.e.) | | |
|---|---|---|---|---|
| | Time (min) | IMF 1 | IMF 2 | IMF 3 |
| Gastric phase | 0 | 0.99 (0.15) | 0.95 (0.18) | 0.34 (0.03) |
| | 10 | 1.02 (0.14) | 0.96 (0.14) | 0.33 (0.03) |
| | 60 | 0.99 (0.18) | 1.10 (0.24) | 0.36 (0.05) |
| | 90 | 6.54 (2.38) | 7.18 (0.91) | 12.78 (0.68) |
| | 120 | 9.10 (1.59) | 9.75 (0.44) | 14.46 (0.42) |

During gastric digestion, the particle distribution and microscopic images were markedly different between IMF 1, 2 versus IMF 3. In regular IMF 3 the specific surface area (SSA) decreased profoundly due to formation of large protein aggregates. For IMF 1 and 2 of the present invention protein aggregate formation was far less and intact large lipid droplets remained present, with less increase changes in particle size distribution (see Figure 1). Up to 60 min the SSA of did not change much, and the SSA of IMF 3 was higher than that of the other IMF, but at t=90 and t=120 the SSA dropped in all IMF and was lowest in IMF 3. Concomitantly in regular IMF 3 the volume weighted mean diameter (D[4,3]) and the surface weighted mean D[3,2] of the particles were lower than the other IMF up to 60 min. After 60 min the particle size increased in all IMF but increased most profoundly in IMF 3 resulting in significantly larger particles in IMF 3 compared to the other IMF, due to formation of large protein aggregates. For the IMF of the present invention protein aggregate formation was far less and intact large lipid droplets remained present, with less increase changes in particle size distribution.

### Example 2: Effect of different phospholipid coating on lipolysis

Infant formulas with different sources of phospholipids were tested.
IMF 1 was similar to IMF 1 of example 1.
IMF 2 (comparative - not according to the invention) was similar to IMF 1 except that 1.5 wt.% egg phospholipid was used instead of milk derived phospholipids. IMF 3 (comparative - not according to the invention) comprised 1.5 wt.% soy phospholipids. IMF 4 is the standard, control IMF, similar to IMF 3 of example 1. The mode based on volume of the lipid globules in IMF 2 was about 5.1 µm and in IMF 3 about 4.6 µm.

150 ml Infant formula were subjected to gastric and intestinal conditions using a pH and substrate pump controlled setup at 37°C as described in Van den Braak et al. (Clin Nutr. 2013 Oct;32(5):765-71), adapted to simulate human infant physiology. In short, gastric digestion was mimicked by a gradual pH decrease over 120 minutes from pH 6.8 to pH 4.3 upon addition of 1 M hydrochloric acid, 25 ml of 0.6 mg/ml alpha-amylase, and 52.5 ml of 0.05 mg/ml porcine pepsin (SIGMA), and 0.125 mg/ml fungal lipase (Amano). Comparative experiments showed that digestion of IMF 1 was very similar when using the fungal lipase or rabbit gastric lipase (which is similar to human gastric lipase). Subsequently, intestinal digestion was mimicked over 120 minutes by pH increase to a pH of 7.2 upon addition of 1 M sodium hydroxide / 1 M sodium carbonate, 0.75 ml 2 mg/ml porcine trypsin, 135 ml 0.015 g/ml pancreatin and 0.005 g/ml bile extract (SIGMA). Samples were taken at t=0-10-30-60-90-120 minutes (during gastric digestion) and at t=130-150-180-210-240 minutes (= 10-30-60-90-120 minutes during intestinal digestion). An amount of 1 ml sample collected in glass tubes were frozen at -80 °C for free fatty acids (FFA) analysis by GC.

Results are shown in Table 2.

**Table 2: Formation of free fatty acids upon digestion of IMF with different lipid globule properties in an in vitro model for infant digestion (n=3).**

| | | Mean FFA formed mM (s.e.) | | | |
|---|---|---|---|---|---|
| | Time (min) | IMF 1 | IMF 2 | IMF 3 | IMF 4 |
| Gastric phase | 0 | 0,50 (0,21) | 0,30 (0,05) | 0,35 (0,08) | 0,80 (0,09) |
| | 10 | 7,35 (0,84) | 13,19 (1,21) | 13,00 (1,53) | 15,57 (2,21) |
| | 30 | 12,97 (0,16) | 17,32 (1,88) | 17,28 (1,21) | 22,27 (0,93) |
| | 60 | 16,93 (0,33) | 21,95 (3,33) | 19,62 (1,81) | 26,62 (3,12) |
| | 90 | 18,97 (1,85) | 18,03 (2,80) | 20,31 (2,02) | 29,30 (2,20) |
| | 120 | 17,33 (1,52) | 19,23 (2,26) | 19,24 (2,42) | 32,42 (1,31) |
| Intestinal phase | 130 | 37,35 (6,39) | 36,41 (5,87) | 36,76 (2,89) | 56,23 (1,21) |
| | 150 | 51,15 (1,66) | 49,76 (7,13) | 47,29 (5,62) | 64,86 (3,82) |
| | 180 | 61,30 (4,19) | 68,89 (7,38) | 71,32 (8,57) | 82,42 (3,84) |
| | 210 | 65,20 (1,96) | 75,57 (2,74) | 77,52 (3,36) | 81,87 (0.92) |
| | 240 | 67,03 (1,01) | 74,69 (3,89) | 76,18 (2,11) | 83,03 (2,89) |

For IMF 1 of the present invention the concentration FFA formed during simulated gastrointestinal digestion was lower than for standard, control IMF 4, similar to example 1. IMF 2 and 3 with egg phospholipid or soy phospholipid coating, respectively showed an intermediate effect, but were more similar to the control IMF 4, especially with respect to the initial rate of lipolysis in the gastric phase (see Table 2). The kinetics of FFA formation was very similar between IMF 2 and IMF 3, showing a higher FFA formation than IMF 1 and a slightly lower rate than IMF 4.

The average gastric lipolysis after 120 minutes digestion was slower for IMF 1 compared to regular IMF 4: 0.13 vs 0.22 mM FFA/min. The average gastric lipolysis of IMF 2 and IMF 3 was 0.11 and 0.12 mM FFA/min, respectively.

The overall gastrointestinal lipolysis rate (after 240 min) was slower for IMF 1 compared to regular IMF 4: 0.29 vs. 0.35 mM FFA/min. The overall gastrointestinal lipolysis of IMF 2 and IMF 3 was 0.31 and 0.32 mM FFA/min, respectively.

The average lipolysis after subsequent 120 minutes digestion under small intestinal conditions was more comparable (∼0.35 mM FFA/min) for IMF 1 and IMF 4 and lower than (∼0.45 mM FFA/min) for IMF 2 and IMF 3.

### Example 3: Dynamic intestinal model (TIM)

The IMF 1, IMF 2 and IMF 3 of the Test composition described above were digested in vitro using a semi dynamic intestinal model (TIM-1) as described in Abrahamse et al.(2012, Food Dig. 3: 63-77) adapted to simulate human infant physiology and with specific settings to determine lipid digestion and absorption. Results are shown in table 3.

**Table 3: % Lipolysis upon digestion of IMF with different lipid globule properties in a dynamic in vitro model for infant digestion (n=3).**

| | | Mean lipolysis % FFA (s.e.) | | |
|---|---|---|---|---|
| | Time (min) | IMF 1 | IMF 2 | IMF 3 |
| Gastric phase | **0-10** | 2,02 (1,59) | 3,99 (0,45) | 2,92 (1,74) |
| | **10-20** | 3,44 (1,84) | 4,96 (0,44) | 8,69 (0,20) |
| | **20-30** | 4,30 (2,16) | 5,31 (0,56) | 6,11 (0,98) |
| | **30-60** | 7,06 (1,80) | 8,06 (0,73) | 5,08 (0,41) |
| | **60-90** | 11,33 (1,75) | 11,68 (1,67) | 11,19 (2,76) |
| | **90-120** | 11,18 (2,30) | 8,64 (2,44) | 14,67 (6,32) |
| Intestinal phase | **0-15** | 11,09 (1,02) | 8,98 (0,78) | 11,70 (1,30) |
| | **15-30** | 13,01 (1,27) | 11,40 (0,31) | 15,26 (0,85) |
| | **30-60** | 15,33 (1,03) | 13,66 (0,22) | 18,71 (0,19) |
| | **60-90** | 15,74 (0,79) | 14,47 (0,82) | 19,38 (1,09) |
| | **90-120** | 13,57 (0,69) | 11,86 (1,15) | 19,47 (1,69) |

The lipid hydrolysis of IMF 1 and IMF 2 between 90 to 120 min of gastric and intestinal digestion is lower and slower, than that of IMF 3, comparable to the result of example 1. This difference in hydrolysis starts during early gastric digestion (within 20 min) and continues to have an effect during intestinal digestion. Lipid absorption at the end of digestion was optimal and similar for all IMF (∼ 93%).

### Example 4: Surface properties of the lipid globules as assessed by trans-electron microscopy (TEM)

Sample preparation for TEM imaging was similar to the one described in Gallier et al. (Food Chemistry 2013, 141:3215-3223) with modifications. The samples (human milk, IMF 1 and IMF 3 described above under Test compositions) were mixed with 3 % low temperature gelling agarose (kept at 50 °C) at a ratio 1:1 in a 15 ml tube. After cooling, the gelled samples were cut into 1 mm³ blocks and transferred into 3 % glutaraldehyde in 0.1 M cacodylate buffer, pH 7.2. After fixation, the blocks were washed with 0.1 M cacodylate buffer, pH 7.2. Post-fixation was carried out with 1 % osmium tetroxide (OsO4). The blocks were washed with water. Staining en-bloc was carried out with 1% uranyl acetate. The blocks were dehydrated in an ethanol series (50-100%) and embedded in Epon resin. Sections (60 nm) were prepared with a Leica ultramicrotome (Wetzlar, Germany). Poststaining on grids (Cu 100M-H coated with Formvar film and carbon coat) was carried out with 7% Uranyl Acetate and with Reynolds Pb-citrate. The imaging was carried out with a Tecnai 10/12 transmission electron microsope (FEI, Hillsboro, OR, USA) equipped with a SIS CCD camera MegaView II, a single tilt specimen holder and the proprietary software AnalySISPro.

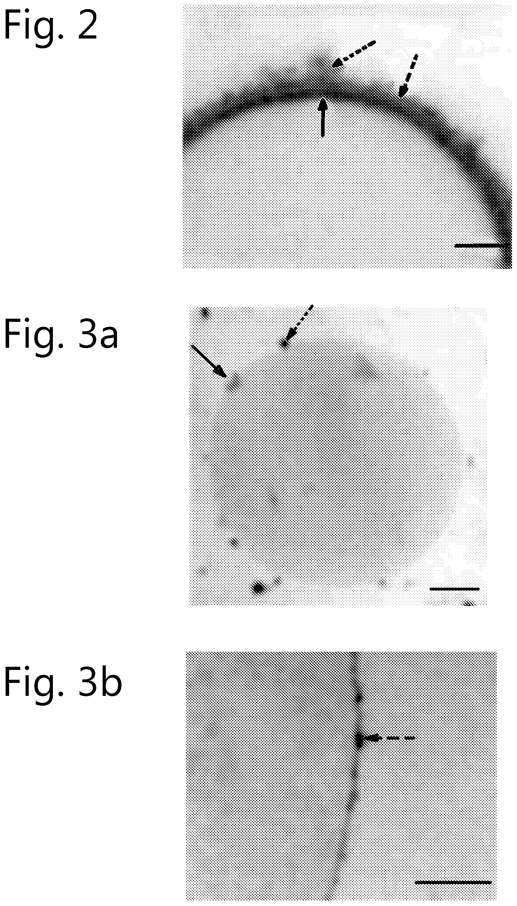

Figure 2 shows part of a typical human milk lipid globule. The thickness of the MFGM trilayer with its glycocalyx varies from 5 to 20 nm. The dashed arrow points at the MFGM bilayer; the diamond arrow points at the MFGM inner monolayer; the dotted arrow points at the MFGM glycocalyx protruding in the aqueous phase; scale bar represents 50 nm.

Figures 3A and B show lipid globules of IMF 1 with a thin membrane (5-10 nm), including few protein aggregates. Some droplets had casein micelles interacting with the interface. Also bovine MFGM fragments were detected in the aqueous phase interacting at the interface of the fat droplets. The dotted arrow points at casein micelles interacting with the interface of the lipid globules; the solid arrow points at MFGM fragments in the aqueous phase and at the interface of the globules; the dashed arrow points at small interfacial protein aggregates; scale bars represent A: 1 µm; B: 200 nm.

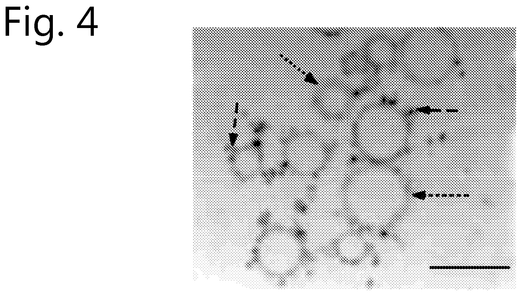

Figure 4 shows the fat droplets of control IMF 3 with a thicker (20-100 nm) and more densely stained protein membrane than the thin membrane surrounding concept IMF 3 lipid globules. Protein aggregates are observed at the interface of control IMF 3 lipid globules but are larger than the ones at the interface of inventive IMF 1 lipid globules. Aggregation of lipid globules was likely due to protein bridges or inter-droplet protein-protein interactions. No MFGM fragments were detected in control IMF 3. The dashed arrows point at interfacial protein aggregates; the dotted arrows point at lipid globules with a thick protein coat; scale bar represents 500 nm.

IMFs have a whey protein:casein ratio of 60:40. β-Lactoglobulin is the main whey protein in IMF. During heat treatment above 65°C, β-lactoglobulin unfolds and interacts with itself and other proteins due to its free thiol group leading to the formation of disulphide bonds between molecules. The aggregation of β-lactoglobulin with other proteins will produce a thicker membrane than the compact and thin (2-3 nm) layer formed by native β-lactoglobulin molecules. As both inventive IMF and control IMFs were heat-treated at temperature higher than 65°C, β-lactoglobulin is more likely to be present as an aggregated protein molecule. Unsaturated phospholipids form a very thin monolayer of about 2 nm and saturated phospholipids, like sphingomyelin, form monolayers of up to 4 nm due to straighter fatty acid chains. So the interface of control IMF 3 lipid globules is composed of caseins and whey proteins only, mostly in the aggregated state, and the interface of inventive IMF lipid globules likely to be composed of phospholipids, MFGM fragments or adsorbed MFGM proteins and lipids, and native undenatured milk proteins and few casein micelles associated with the interface. Using transmission electron microscopy, HM lipid globules, and the lipid globules of the inventive IMF according to the present invention and the current standard IMF 3 were characterized. The IMF of the current invention contains lipid globules having a similar size and a phospholipid coating as in human milk.

### Example 5: Gastric emptying rate is increased and earlier post prandial lipid absorption is observed upon ingestion of formulae with large lipid globules coated with phospholipids compared to standard formula

Fasted, healthy male volunteers (n=29) ingested either concentrated IMF 1 or concentrated IMF 3 described above under Test composition, as a single meal, with a fat load of 38 gram in 400 ml at 9.00 am on a test day. 15 Individuals received IMF 1, 14 individuals received IMF 3. After ingestion of the meal, plasma levels of triacylglycerols, and lipoproteins were measured for up to 5 h. The test was set up with a cross over design. After 5 days the test was repeated and the individuals received the alternative IMF.

Postprandial the levels of plasma triglycerides at t=15 min were slightly decreased, as the subjects were overnight fasting. An increase above the level at t=0 was observed starting after 30 min in the group consuming IMF 1 and after 45 in the group consuming IMF 3. This is indicative for a gastric emptying time, hence release of the lipid from the stomach in the duodenum, which was shorter in the group consuming IMF 1. The increase of triglycerides was the fastest and the peak value was the highest in the group consuming IMF 1.

The plasma levels of free fatty acids (FFA) in time was significantly different (p<0.05) with IMF 1 compared to IMF 3. Initially the levels of FFA were still declining, as the human subjects had been fasting overnight. In the group consuming IMF 1 the decline of FFA stopped earlier, at t=45, and started to increase, compared to the group consuming IMF 3, where the FFA stopped declining after 90 min. This is indicative for a faster switch from fat to carbohydrate oxidation, but also indicative for a shorter gastric emptying time or faster gastric emptying rate.

Regarding the postprandial response of plasma cholecystokinin (CCK), a statistically significant difference between the control (IMF3) and active product IMF1 was observed (P=0.012). After consumption of IMF3 the CCK concentration was initially (at =30 min) significantly lower (3.73 pmol/l versus 7.70 pmol/l for IMF3) and at t=90 statistically significantly higher (5.97 pmol/l versus 2.51 pmol/l for IMF3). So an earlier response of CCK was observed in the control group IMF3 compared to the IMF1 group. Peak levels, areas under the curve (AUC) and incremental AUC were not significantly different between the two diet groups. CCK inhibits gastric emptying, prolongs gastric retention, and thus delays the delivery of the nutrients to the duodenum, so a slower response indicates that there is less inhibition of gastric emptying, so an increased gastric emptying rate, after consumption of IMF1.

Plasma levels of apoB48 rose upon meal ingestion, which is indicative for the chylomicron level, as each chylomicron secreted by the gut epithelial cells contains one apoB48 molecule. The peak concentration of chylomicrons formed appeared to be slightly lower in the group consuming IMF 1. This is indicative for a higher triglyceride load of the chylomicron when consuming IMF 1. Also in breast fed infants a statistically higher ratio of tryglyceride/apoB48 was observed compared to infants fed a standard infant formula similar to IMF 3 of example 1 (data not shown).

The number of large VLDL particles (>60 nm) decreased in IMF 1 but not in IMF 3, during the first 2 hours of the postprandial response and had returned to baseline after 5 hours. This fraction comprises both VLDL particles and the chylomicrons. In contrast, the number of small VLDL particles (27-35 nm) decreased, when subjects consumed IMF 3 product (p=0.023). Again these observations point toward larger chylomicrons upon ingestion of IMF 3.

Satiety assessment by visual analogue score gave no different result between the IMF 1 and IMF 3 product group. Furthermore, the total amount of triglyceride absorbed (as determined by the area under the curve) did not differ between IMF 1 and IMF 3.

These examples are indicative of an improved, i.e. increased, rate of gastric emptying and/or improved, i.e. earlier and increased, rate of postprandial triglyceride absorption, an increased ratio of triglyceride/apoB48 or triglyceride load of chylomicrons and/or a decreased and slower aggregation in the stomach, after consuming a nutritional composition comprising lipid globules that are larger than conventional, or with a lower specific surface area than conventional, and that comprise a coating comprising milk derived phospholipids. By feeding infants or young children a formula with lipid globules more resembling human milk lipid globules in size and coating, a lipid absorption pattern is observed which is thought to be more similar to that when fed of human milk. This differences may result in short term and long term health benefits. This effect occurs even though the formula has lipid globules which were neo-formed during the mild homogenization steps and even when undergoing, in the presence of proteins, a heat treatment.

## Claims

1. A nutritional composition for use in reducing the rate and extent of protein aggregate formation in the stomach and/or increasing the gastric emptying rate in an infant with an age below 36 months that suffers from delayed gastric emptying and/or gastric reflux, the composition comprising carbohydrates, protein, and lipid globules, wherein the protein comprises casein and the lipid globules comprise triglycerides derived from vegetable fat and phospholipids derived from non human mammalian milk and wherein the lipid comprises at least 10 wt.% linoleic acid based on total fatty acids and at least 1 wt.% alpha-linolenic acid based on total fatty acids and wherein the lipid globules have
- a mode diameter from 2 to 6 µm, wherein the mode diameter is the diameter which is the most present based on volume of total lipid, or
- a specific surface area from 2.0 to 7.0 m²/g lipid, wherein the specific surface area is the surface area per weight of lipid, or
- a mode diameter from 2 to 6 µm and a specific surface area from 2.0 to 7.0 m²/g lipid
wherein the method to determine the volume of lipid globules and their size distribution is by using a Mastersizer particle size analyzer (Malvern Instruments, Malvern, UK) according to the method described in Michalski *et al,* 2001, Lait 81: 787-796 and wherein the lipid globules comprise a coating comprising the phospholipids and the composition comprises 30 to 99.5 wt.% vegetable lipids based on total lipids and at least 80 wt.% of the phospholipids is derived from cow's milk,
and wherein the nutritional composition is an infant formula and/or a follow on formula.

2. The nutritional composition for use according to claim 1, wherein the amount of lipid is at least 15 wt.% based on dry weight of the composition.

3. The nutritional composition for use according to claim 1 or 2, wherein the amount of phospholipids is at least 0.5 wt.% based on total lipid.

4. The nutritional composition for use according to any one of the preceding claims wherein the phospholipids comprise at least 15 wt.% sphingomyelin based on total phospholipids.

5. The nutritional composition for use according to any one of the preceding claims wherein the phospholipids comprise at least 2 wt.% phosphatidyl-serine based on total phospholipid.

6. The nutritional composition for use according to any one of the preceding claims, wherein the nutritional composition comprises non human mammalian milk fat.

7. The nutritional composition for use according to any one of the preceding claims wherein the lipid comprises at least 0.3 wt.% butyric acid based on total fatty acids.

8. The nutritional composition for use according to any one of the preceding claims wherein the nutritional composition is for providing nutrition to human subjects with an age below 36 months.

9. The nutritional composition for use according to any one of the preceding claims wherein the lipid globules comprise a monolayer comprising phospholipids derived from milk fat.

10. The nutritional composition for use according to any one of the preceding claims wherein the phospholipids are provided as milk fat globule membrane.

11. The nutritional composition for use according to any one of the preceding claims wherein the nutritional composition is in the form of a powder.

## Patentansprüche

1. Ernährungszusammensetzung zur Verwendung bei der Verringerung der Rate und des Ausmaßes der Bildung von Proteinaggregaten im Magen und/oder der Erhöhung der Magenentleerungsrate bei einem Säugling mit einem Alter unter 36 Monaten, der an verzögerter Magenentleerung und/oder Magenrückfluss leidet, wobei die Zusammensetzung Kohlenhydrate, Protein und Lipidkügelchen umfasst, wobei das Protein Casein umfasst und die Lipidkügelchen Triglyceride, die von pflanzlichem Fett stammen, und Phospholipide, die von nicht menschlicher Säugetiermilch stammen, umfassen und wobei das Lipid mindestens 10 Gew.-% Linolsäure, bezogen auf die Gesamtfettsäuren, und mindestens 1 Gew.-% alpha-Linolensäure, bezogen auf die Gesamtfettsäuren, umfasst und wobei die Lipidkügelchen
- einem Modendurchmesser von 2 bis 6 µm, wobei der Modendurchmesser der Durchmesser ist, der auf der Basis des Volumens des Gesamtlipids am meisten vorhanden ist, oder
- eine spezifische Oberfläche von 2,0 bis 7,0 m²/g Lipid, wobei die spezifische Oberfläche die Oberfläche pro Gewicht des Lipids ist, oder
- einen Modendurchmesser von 2 bis 6 µm und eine spezifische Oberfläche von 2,0 bis 7,0 m²/g Lipid
wobei das Verfahren zur Bestimmung des Volumens der Lipidkügelchen und ihrer Größenverteilung unter Verwendung eines Mastersizer-Partikelgrößenanalysators (Malvern Instruments, Malvern, UK) gemäß dem in Michalski *et al,* 2001, Lait 81: 787-796 beschriebenen Verfahren erfolgt und wobei die Lipidkügelchen eine Beschichtung umfassen, die die Phospholipide umfasst, und die Zusammensetzung 30 bis 99,5 Gew.-% pflanzliche Lipide, bezogen auf die Gesamtlipide, umfasst und mindestens 80 Gew.-% der Phospholipide aus Kuhmilch stammen und wobei die Ernährungszusammensetzung eine Säuglingsanfangsnahrung und/oder eine Folgenahrung ist.

2. Ernährungszusammensetzung zur Verwendung nach Anspruch 1, wobei die Lipidmenge mindestens 15 Gew.-%, bezogen auf das Trockengewicht der Zusammensetzung, beträgt.

3. Die Ernährungszusammensetzung zur Verwendung nach Anspruch 1 oder 2, wobei die Menge an Phospholipiden mindestens 0,5 Gew.-%, bezogen auf das Gesamtlipid, beträgt.

4. Die Ernährungszusammensetzung zur Verwendung gemäß einem der vorstehenden Ansprüche, wobei die Phospholipide mindestens 15 Gew.-% Sphingomyelin, bezogen auf die Gesamtphospholipide, umfassen.

5. Die Ernährungszusammensetzung zur Verwendung gemäß einem der vorstehenden Ansprüche, wobei die Phospholipide mindestens 2 Gew.-% Phosphatidyl-Serin, bezogen auf das Gesamtphospholipid, umfassen.

6. Die Ernährungszusammensetzung zur Verwendung gemäß einem der vorstehenden Ansprüche, wobei die Ernährungszusammensetzung nichtmenschliches Säugetiermilchfett umfasst.

7. Die Ernährungszusammensetzung zur Verwendung gemäß einem der vorstehenden Ansprüche, wobei das Lipid mindestens 0,3 Gew.-% Buttersäure, bezogen auf die gesamten Fettsäuren, umfasst.

8. Die Ernährungszusammensetzung zur Verwendung gemäß einem der vorstehenden Ansprüche, wobei die Ernährungszusammensetzung dazu dient, Menschen mit einem Alter unter 36 Monaten mit Nährstoffen zu versorgen.

9. Die Ernährungszusammensetzung zur Verwendung gemäß einem der vorstehenden Ansprüche, wobei die Lipidkügelchen eine Monoschicht umfassen, die von Milchfett stammende Phospholipide umfasst.

10. Die Ernährungszusammensetzung zur Verwendung gemäß einem der vorstehenden Ansprüche, wobei die Phospholipide als Milchfettkügelchenmembran bereitgestellt werden.

11. Die Ernährungszusammensetzung zur Verwendung gemäß einem der vorstehenden Ansprüche, wobei die Ernährungszusammensetzung in Form eines Pulvers vorliegt.

## Revendications

1. Composition nutritionnelle pour une utilisation dans la réduction de la vitesse et de l'étendue de la formation d'agrégats de protéines dans l'estomac et/ou l'augmentation de la vitesse de vidage gastrique chez un enfant de moins de 36 mois souffrant de vidage gastrique retardé et/ou de reflux gastrique, la composition comprenant des glucides, des protéines et des globules lipidiques, dans laquelle les protéines comprennent de la caséine et les globules lipidiques comprennent des triglycérides dérivés de graisses végétales et de phospholipides dérivés de lait de mammifère non humain et dans laquelle les lipides comprennent au moins 10% en poids d'acide linoléique sur la base des acides gras totaux et au moins 1% en poids d'acide alpha-linoléique sur la base des acides gras totaux et dans laquelle les globules lipidiques ont :
- un diamètre de mode de 2 à 6 µm, dans laquelle le diamètre de mode est le diamètre qui est le plus présent sur la base d'un volume lipidique total, ou
- une surface active spécifique de 2,0 à 7,0 m²/g de lipides, dans laquelle la surface active spécifique est la surface active par poids de lipides, ou
- un diamètre de mode de 2 à 6 µm et une surface active spécifique de 2,0 à 7,0 m²/g de lipides,
dans laquelle le procédé pour déterminer le volume des globules lipidiques et leur distribution de taille se fait à l'aide d'un analyseur de taille de particules Mastersizer (Malvern Instruments, Malvern, Royaume-Uni) conformément au procédé décrit dans Michalski *et al,* 2001, Lait 81 : 787-796 et dans laquelle les globules lipidiques comprennent 30 à 99,5 % en poids de graisses végétales sur la base de lipides totaux et au moins 80 % en poids des phospholipides est dérivé de lait de vache,
et dans laquelle la composition nutritionnelle est une formule pour enfant et/ou une formule deuxième âge.

2. Composition nutritionnelle pour l'utilisation selon la revendication 1, dans laquelle la quantité de lipide est d'au moins 15 % en poids sur la base du poids sec de la composition.

3. Composition nutritionnelle pour l'utilisation selon l'une des revendications 1 ou 2, dans laquelle la quantité de phospholipides est d'au moins 0,5 % en poids sur la base des lipides totaux.

4. Composition nutritionnelle pour l'utilisation selon l'une quelconque des revendications précédentes, dans laquelle les phospholipides comprennent au moins 15 % en poids de sphingomyéline sur la base des phospholipides totaux.

5. Composition nutritionnelle pour l'utilisation selon l'une quelconque des revendications précédentes, dans laquelle les phospholipides comprennent au moins 2 % en poids de phosphatidyl-sérine sur la base des phospholipides totaux.

6. Composition nutritionnelle pour l'utilisation selon l'une quelconque des revendications précédentes, dans laquelle la composition nutritionnelle comprend de la matière grasse de lait de mammifère non humain.

7. Composition nutritionnelle pour l'utilisation selon l'une quelconque des revendications précédentes, dans laquelle les lipides comprennent au moins 0,3 % en poids d'acide butyrique sur la base des acides gras totaux.

8. Composition nutritionnelle pour l'utilisation selon l'une quelconque des revendications précédentes, dans laquelle la composition nutritionnelle consiste à fournir une nutrition à des êtres humains âgés de moins de 36 mois.

9. Composition nutritionnelle pour l'utilisation selon l'une quelconque des revendications précédentes, dans laquelle les globules lipidiques comprennent une monocouche comprenant des phospholipides dérivés de matière grasse du lait.

10. Composition nutritionnelle pour l'utilisation selon l'une quelconque des revendications précédentes, dans laquelle les phospholipides sont fournis sous forme de membrane de globules gras de lait.

11. Composition nutritionnelle pour l'utilisation selon l'une quelconque des revendications précédentes, dans laquelle la composition nutritionnelle est sous la forme d'une poudre.
